# EUROPEAN PATENT APPLICATION

(11) **EP 1 450 236 A2**
(43) Date of publication of application: **25.08.2004**
(21) Application number: 04004140.2
(22) Date of filing: 24.02.2004
(51) Int. Cl.: G06F 1/00, G01C 21/26

(54) **System for managing the secure transfer of digital content to a vehicle navigation device**

(30) Priority: 24.02.2003 JP 2003046034
(71) Applicant: NTT DoCoMo, Inc., Tokyo 100-6150 (JP)
(72) Inventor: Tajima, Koji c/o Int. Property Dept., Chiyoda-ku Tokyo 100-6150 (JP); Matsumoto, Naoki c/o Int. Property Dept., Chiyoda-ku Tokyo 100-6150 (JP); Ban, Hiroaki c/o Int. Property Dept., Chiyoda-ku Tokyo 100-6150 (JP); Yamada, Kazuhiro c/o Int. Property Dept., Chiyoda-ku Tokyo 100-6150 (JP)
(74) Representative: HOFFMANN - EITLE

(57) **Abstract**

A mobile phone (100-1) transmits an identification number of the mobile phone (100-1) to a car navigation device (500). Next, the mobile phone (100-1) transmits a host application to the car navigation device (500). The car navigation device (500) stores the identification number and the host application. Upon receipt of a request in which an identification number is included from the car navigation device (500), the mobile phone (100-1) checks the identification number. If the number is correct, the mobile phone (100-1) transmits a guest application executable with the host application to the car navigation device (500). As a result, illegal copy of a digital content via local communication is prevented.

## Description

### Background of the Invention

### Technical field

The present invention relates to a method for controlling copy and transfer of a digital content.

### Description of the related art

Recently, an increasing number of mobile phones have been provided with a function of accessing a server on the Internet to download a digital content such as music and image data, and an application program (hereinafter referred simply to as a "content"). Several systems, such as that disclosed for example in Japanese Patent No. JP2001-111541A, have been suggested for preventing illegal copying of a downloaded content to another mobile phone on which the content can be executed.

It is important to note that recently developed mobile phones generally have a function of performing short-range communication (local communication) with other types of network-ready electronic devices or home appliances such as an audio device or a car navigation system, via a cable or an infrared light compliant to IrDA, for example. As a result, it is possible to transmit data from a mobile phone to an electronic device other than a mobile phone.

Further, contents for such network-ready devices have become increasingly available. It is to be noted that some content can be executed on different types of devices, for example a mobile phone and a car navigation device.

Accordingly, a problem may arise that a content is copied illegally from one type of device to another. It is disadvantageous for a provider (and a developer) of the content to permit copy and transfer via local communication without any restriction. It is therefore desirable to solve this problem.

However, this problem is not solved by the prior art described above, since transfer of a content can be controlled only in a mobile communication network in which the same type of electronic devices (namely, mobile phones only) are accommodated. Namely, it is not possible, using the prior art, to prevent illegal transfer to other electronic devices via local communication.

### Disclosure of the Invention

To solve the above problem, the present invention has as its object, provision of a method for controlling transfer of a content to other devices via local communication.

An electronic device of the present invention comprises: a storage; an obtaining unit for obtaining a first application that can be executed on the electronic device and an identifier of a communication terminal, to store in the storage; a receiving unit for receiving from a communication terminal an identifier of the communication terminal and a second application that can be executed only with the first application; and a storing control unit for comparing the identifier received by the receiving unit with the identifier stored in the storage and, if both of the identifiers are identical, storing the second application in the storage, and if both of the identifiers are not identical, deleting the second application.

In another aspect of the present invention, there is provided an electronic device comprising: a storage; an obtaining unit for obtaining a first application that can be executed on the electronic device and an identifier of a communication terminal, to store in the storage; a first receiving unit for receiving an identifier of a communication terminal from the communication terminal; a transmitting unit for comparing the identifier received by the first receiving unit with the identifier stored in the storage and, only if the identifiers are identical, transmitting a request to the communication terminal; and a second receiving unit for receiving from the communication terminal a second application that can be executed only with the first application. The electronic device may be a car navigation device.

In yet another aspect of the present invention, there is provided a communication terminal comprising: a storage for storing an identifier of the communication terminal, a first application, and a second application that can be executed only with the first application; a transmitting unit for transmitting the identifier of the communication terminal and the first application to an electronic device that is capable of executing the first application; a receiving unit for receiving an identifier from an electronic device; a transfer controlling unit for comparing the identifier received by the receiving unit with the identifier stored in the storage and, only if the identifiers are identical, transmitting the second application to the electronic device.

In yet another aspect of the present invention, there is provided a communication terminal comprising: a storage for storing an identifier of the communication terminal, a first application, and a second application that can be executed only with the first application; a transmitting unit for transmitting the identifier of the communication terminal and the first application to an electronic device that is capable of executing the first application; a transfer controlling unit for receiving a message from a communication terminal and determining, on the basis of the message, whether to transmit the second application to the communication terminal.

In yet another aspect of the present invention, there is provided a computer program product for causing a computer to execute the steps of: obtaining a first application that can be executed on the computer and an identifier of a communication terminal to store in a storage of the computer; receiving from a communication terminal an identifier of the communication terminal and a second application that can be executed only with the first application; and comparing the received identifier with the identifier stored in the storage and, if the identifiers are identical, storing the second application in the storage, and if the identifiers are not identical, deleting the second application.

In yet another aspect of the present invention, there is provided a computer program product for causing a computer to execute the steps of: obtaining a first application that can be executed on the computer and an identifier of a communication terminal to store in a storage of the computer; receiving an identifier of a communication terminal from the communication terminal; comparing the received identifier with the identifier stored in the storage and, only if the identifiers are identical, transmitting a request to the communication terminal; and receiving from the communication terminal a second application that can be executed only with the first application.

### Brief Description of the Drawings

Fig. 1 shows an example of a configuration of a communication system 10.
Figs. 2A and 2B show an example of software configurations of mobile phone 100 and car navigation device 500.
Fig. 3 also shows an example of software configurations of mobile phone 100 and car navigation device 500.
Fig. 4 shows an example of a hardware configuration of mobile phone 100.
Fig. 5 shows an example of a processing flow of transfer of a CN host application
Fig. 6 shows an example of a processing flow of transfer of the CN host application by mobile phone 100.
Fig. 7 shows an example of a processing flow of transfer of a guest application by mobile phone 100.
Fig. 8 shows an example of a screen displayed on display 105 of mobile phone 100.
Fig. 9 also shows an example of a screen displayed on display 105 of mobile phone 100.
Fig. 10 shows an example of a hardware configuration of car navigation device 500.
Fig. 11 shows an example of a processing flow of car navigation device 500 when receiving the CN host application
Fig. 12 shows an example of a processing flow of car navigation device 500 when receiving the guest application.
Fig. 13 shows another example of a processing flow of car navigation device 500 when receiving the guest application
Fig. 14 shows an example of a screen displayed on display 505 of car navigation device 500.
Fig. 15 shows another example of a screen displayed on display 505 of car navigation device 500.
Fig. 16 shows an example of a processing flow of the system.
Fig. 17 shows another example of a processing flow of the system.
Fig. 18 shows yet another example of a processing flow of the system.

### Detailed Description

### <A. Configuration>

### (1. Overall system)

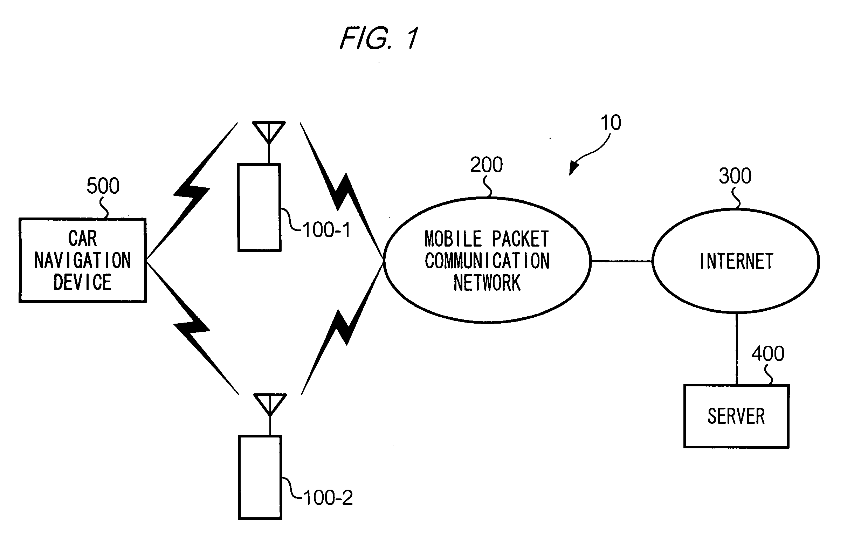

Fig. 1 exemplifies a configuration of a communication system 10 according to an embodiment of the present invention. Although there may be many mobile phones and servers and car navigation devices, only mobile phones 100-1 and 100-2, a server 400, and a car navigation device 500 are illustrated in the figure, for the sake of simplicity.

A mobile packet communication network 200 is operated by a communication network company. Data communication service is provided to subscribers via mobile packet communication network 200. Specifically, mobile packet communication network 200 includes base stations for performing wireless communication with mobile phones 100, switching center (not shown in the figure), and gateway server (not shown in the figure) for connecting Internet 300 with the mobile packet communication network 200. Packet communication can be carried out between a mobile phone 100 and a computer device connected to the Internet 300 via the mobile packet communication network 200.

Since mobile phones 100-1 and 100-2 have the same hardware configuration, they will hereinafter be referred to as mobile phone 100, except where it is necessary to specify individual mobile phone 100-1 and 100-2 individually. Mobile phone 100 has a function of performing communication with server 400 via mobile packet communication network 200 and Internet 300, similarly to a standard mobile phone, to download a host application program and a guest application program, which will be described later, from the server 400. In addition, mobile phone 100 has a Bluetooth™ communication interface, which is a short-range wireless communication system, to carry out local communication with another Bluetooth™ - ready device.

The car navigation device 500 has a function of obtaining information on the current position of the vehicle to which the device 500 is provided, using a GPS (Global Positioning System), to indicate the position of the vehicle and possible routes on a displayed map, to thereby guide a driver (a user of the device 500) to a destination. In addition, car navigation device 500 has the Bluetooth™ communication interface, and thus can perform local communication with the mobile phone. This capability of local communication enables the device 500 to obtain from the mobile phone 100 a host application and a guest application downloaded by the mobile phone 100.

The guest application and the host application are stored in the server 400. The server 400 is connected to the Internet 300 and transmits the host application and the guest application to the mobile phone 100 in response to a request issued by the mobile phone 100.

The guest application performs specific functions when executed on mobile phone 100 and car navigation device 500 in a runtime environment. For example, when a guest application is executed on the mobile phone 100 or the car navigation device 500, an application for notifying information on traffic conditions is executed.

A host application establishes the runtime environment for the guest application. Among the host applications provided are an application designed for the mobile phone and an application for the car navigation device, hereinafter referred to as a "MP host application" and "CN host application", respectively.

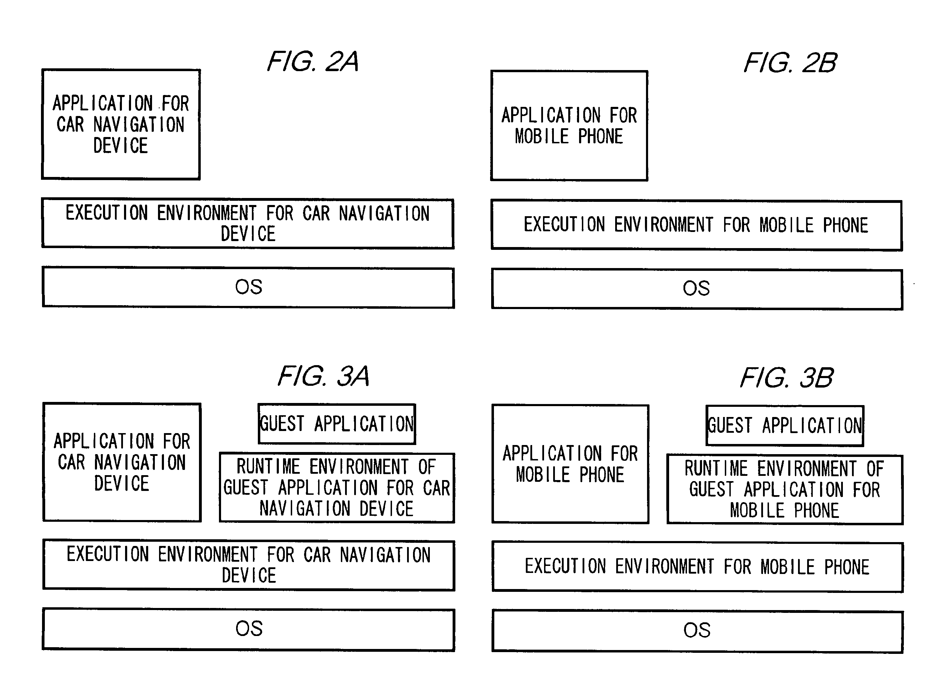

Fig. 2A exemplifies a software configuration to be executed on car navigation device 500. As shown in the figure, in car navigation device 500, an operation system (OS) of car navigation device 500 is first executed. A runtime environment of car navigation device 500 is created above the OS layer. Application programs can be executed in the runtime environment.

Fig. 2B exemplifies a software configuration of mobile phone 100. As shown in the figure, in mobile Phone 100, an operation system (OS) of mobile phone 100 is first executed. A runtime environment of mobile phone 100 is created above the OS layer. Application programs of mobile phone 100 can be executed in the runtime environment. As shown in Fig. 2B, since mobile phone 100 and car navigation device 500 have different hardware configurations, it is necessary to employ different host programs for executing a single guest application.

The host application is an application program for accommodating both mobile phone 100 and car navigation device 500 to execute a single application program. In other words, the host application resolves a discrepancy between runtime environments of mobile phone 100 and car navigation device 500. Figs. 3A and 3B are software configurations when the MP host application and the CN host application are executed on mobile phone 100 and car navigation device 500, respectively. As shown in Figs. 3A and 3B, in each of mobile phone 100 and car navigation device 500, when the host application is executed, the runtime environment for the guest application is established. Following establishment of the environment, the guest application can be executed

### (2. Mobile phone 100)

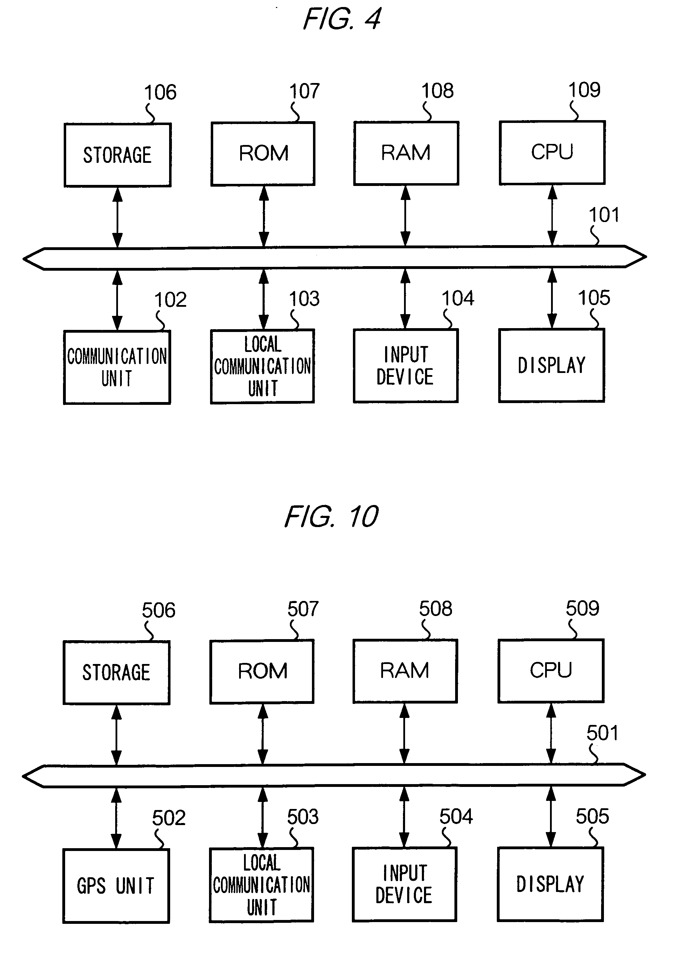

Fig. 4 is a block diagram showing an example of hardware configuration of mobile phone 100. As shown in the figure, every unit of mobile phone 100 is connected to a bus 101 to exchange data among the units.

A communication unit 102 includes a communication interface for performing, under control of a CPU (Central Processing Unit) 109, communication with a base station in the mobile packet communication network 200 via an antenna (not shown). Specifically, upon receipt of a packet from the base station, communication unit 102 supplies the packet to CPU 109. Upon receipt of a packet from CPU 109, communication unit 102 transmits the packet to the base station.

A local communication unit 103 includes a Bluetooth™ communication interface . Specifically, local communication unit 103 supplies a signal received by an outside device to CPU 109 and transmits a signal supplied by CPU unit to the outside device.

An input device 104 has a keypad (not shown) for a user to operate mobile phone 100. When the user presses a key, a particular signal is supplied to CPU 109. A display 105 displays, under control of CPU 109, characters, images, and a menu screen for guiding the user, for example.

A storage 106 includes nonvolatile memory such as an EEPROM. Storage 106 stores application programs, guest application and host application obtained from server 400, and control data. In addition, storage 106 stores a product number of mobile phone 100 for uniquely identifying mobile phone 100. For example, storages 106 of mobile phone 100-1 and 100-2 store product numbers "MS0001" and "MS0002", respectively.

A ROM (Read Only Memory) 107 stores OS software and application programs such as a WWW (World Wide Web) browser program, and runtime environment for executing application programs. Specifically, when mobile phone 100 is turned on, CPU 109 reads the OS from ROM 107 to boot the system, and thereafter control every unit of mobile phone 100 using RAM 108 as its work area. In short, mobile phone 100 has a hardware configuration similar to a standard computer.

When the user inputs an instruction of execution of an application program through input device 104, CPU 109 specifies the user's instruction by a signal supplied from input device 104 and a screen displayed on display 105, and reads a runtime environment program from ROM 107 to execute it. After execution of the runtime environment, CPU 109 reads from ROM 106 the application program specified by the user and executes it.

During execution of the OS, CPU 109 is able to perform communication with car navigation device 500 via Bluetooth™, to transmit host and guest applications.

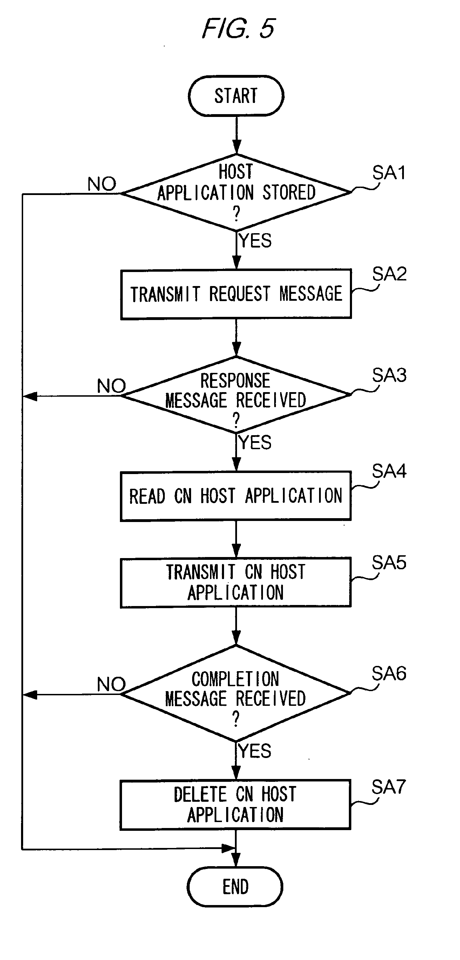

Fig. 5 shows an example of transmission operation of the CN host application to car navigation device 500. When the user of mobile phone 100 inputs, through input device 104, an instruction of transmission of the CN host application, CPU 109 determines whether the CN host application is stored in storage 106 (step SA1). If the CN host application is stored (step SA1, YES), CPU 109 transmits to car navigation device 500 a request message for allowance of transmission of the CN host application (step SA2).

When CPU 109 receives a response message from car navigation device 500 (step SA3, YES), CPU 109 reads the CN host application (step SA4) and sends it to the car navigation device 500 (step SA5). When CPU 109 receives an acknowledgement message, which indicates that the CN host application is received by car navigation device 500 (step SA6, YES), CPU 109 deletes the CN host application from storage 106 (step SA8).

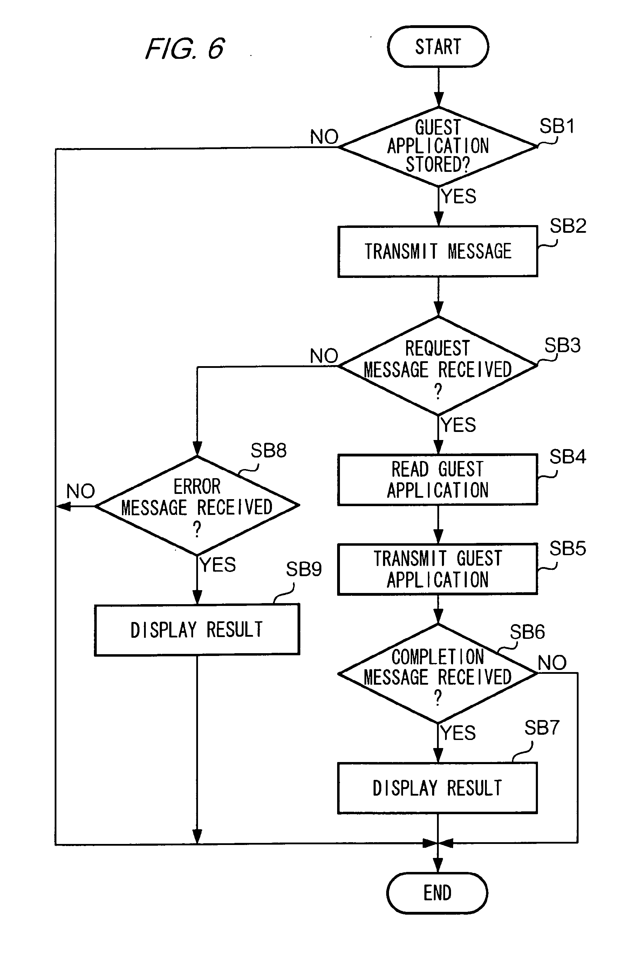

Fig.6 shows an example of operation of transmission of a guest application from mobile phone 100 to car navigation device 500, in response to a request by the mobile phone. When the user of mobile phone inputs an instruction of transmission of the guest application via input device 104, CPU 109 determines whether the guest application is stored in storage 106 (step SB1). If the guest application is stored (step SB 1, YES), CPU 109 transmits to car navigation device 500 a request message for allowance of transmission of the guest application (step SB2),

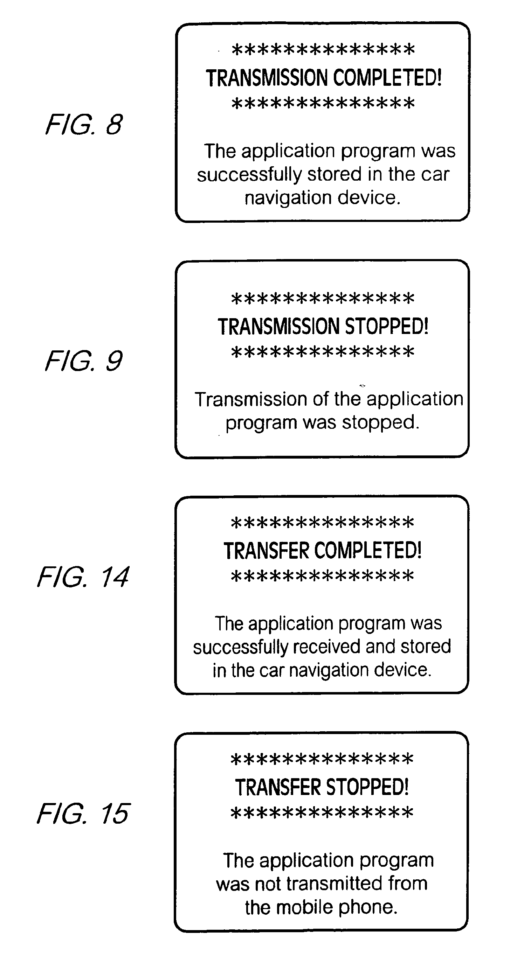

When CPU 109 receives a response message from car navigation device 500 (step SB3,YES), CPU 109 reads the guest application from storage 106 (step SB4), and sends it to car navigation device 500 (step SB5). When CPU 109 receives an acknowledgement message from car navigation device 500 (step SB6, YES), CPU 109 displays a message on display 105 as shown in Fig. 8, to notify the user of completion of the transmission (step SB7).

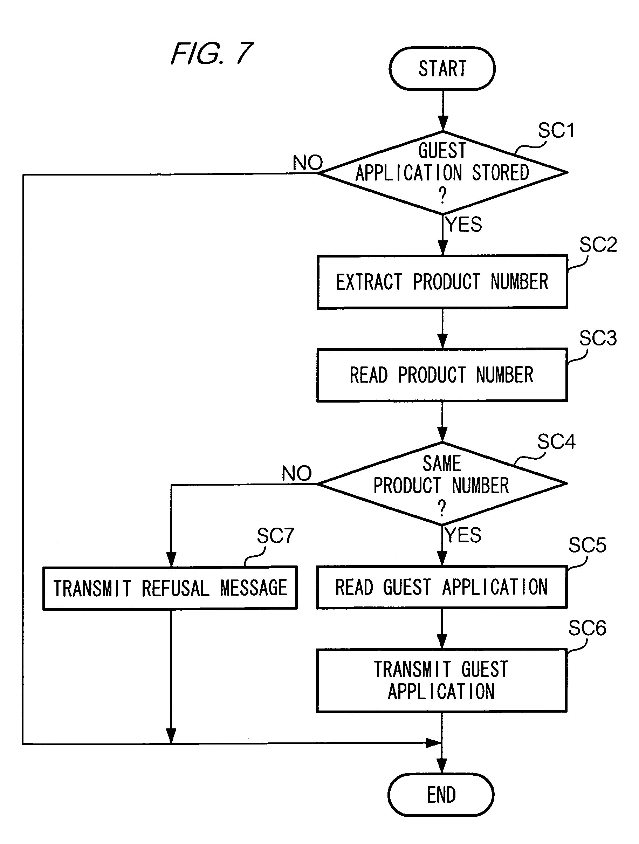

Fig. 7 shows an example of operation of transmission of the guest application from mobile phone 100 to car navigation device 500, in response to a request from car navigation device 500. When local communication unit 103 receives a request for the guest application from car navigation device 500, CPU 109 determines whether the guest application is stored in storage 106 (step SC1). If the guest application is stored (step SC1, YES), CPU 109 extracts from the request a product number (step SC2).

Next, CPU 109 reads a product number from storage 106, to compare the read number with the extracted number (step SC4). If both numbers are the same, CPU 109 reads the guest application from storage 106 (step SC5) and transmits the application to car navigation device 500 (step SC6).

### (3. Car navigation device 500)

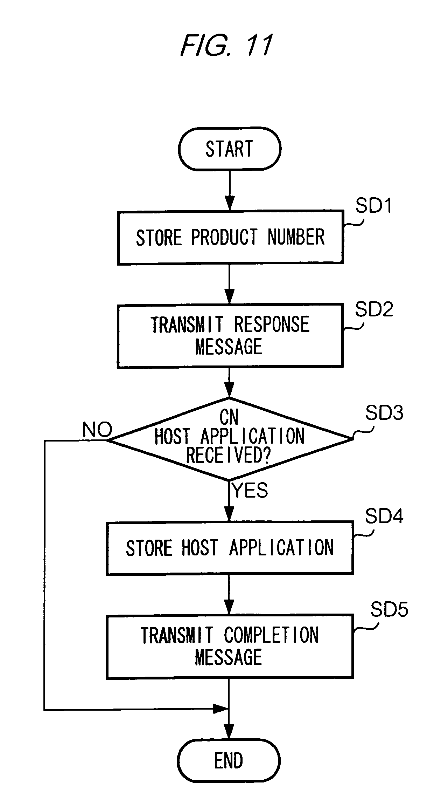

Fig. 10 exemplifies a hardware configuration of car navigation device 500. As shown in the figure, every unit of car navigation device 500 is connected via a bus 501, to exchange data among the units.

GPS (Global Positioning System) unit 502 receives radio waves from satellites, and calculates the latitude and longitude of the current position of car navigation device 500 on the basis of phase differences among the radio waves. Next, GPS unit 502 supplies the latitude and longitude data to CPU 509 via bus 501.

A local communication unit 503 includes an interface for performing communication via Bluetooth™. Specifically, local communication unit 503 supplies a received signal from an outside electronic device to CPU509 and transmits a signal supplied from CPU 509 to an outside electronic device via Bluetooth™.

An input device 504 includes a keypad (not shown) for operation by a user of car navigation device 500. When the user presses a key, a particular signal is supplied to CPU 509. A display 505 displays, under control of CPU 509, a menu screen, a guide map, and the like.

A storage 506 is a device for storing data, such as a hard disk. Specifically, storage 506 stores map data, application programs, host and guest applications for car navigation device 500, and other data for controlling car navigation device 500.

A ROM 507 stores OS software for controlling all units of car navigation device 500, and a program for performing a runtime environment in which application programs can be run. When car navigation device 500 is turned on, CPU 509 firstly reads the OS software from RAM 508 to boot the system, thereby controlling every unit of car navigation device 500 using a RAM as a work area. As described above, car navigation device 500 has functions similar to a standard computer.

During execution of the OS, CPU 509 performs processing according to a user's operation. For example, when the user inputs an instruction of execution of an application program via input device 504, CPU 509 specifies the instruction on the basis of a signal supplied from input device 504 and a screen displayed on display 506, reads a runtime environment program from ROM 507, and executes the runtime environment program. Next, CPU 509 reads from storage 506 the application program specified by the user and executes it.

During execution of the OS, CPU 509 is able to carry out local communication with mobile phone 100 via Bluetooth™, to thereby receive guest and host applications for car navigation device from mobile phone 100 to store in storage 506.

Fig. 11 shows an example of a processing flow of receiving the CN host application from mobile phone 100 and storing it in car navigation device 500. When Local communication unit 503 receives a request message for allowance of transmission of the CN host application from mobile phone 100, CPU 509 extracts a product number included in the request message and stores the number in storage 506 (step SD1). Next, CPU 509 sends a response message to mobile phone 100 (step SD2). Upon receipt of the CN host application from mobile phone, CPU 509 stores the host application in storage 506 (step SD4). Upon completion of storing the host application, CPU 509 sends a completion message to mobile phone 100 to notify the completion of the storing (step SD5).

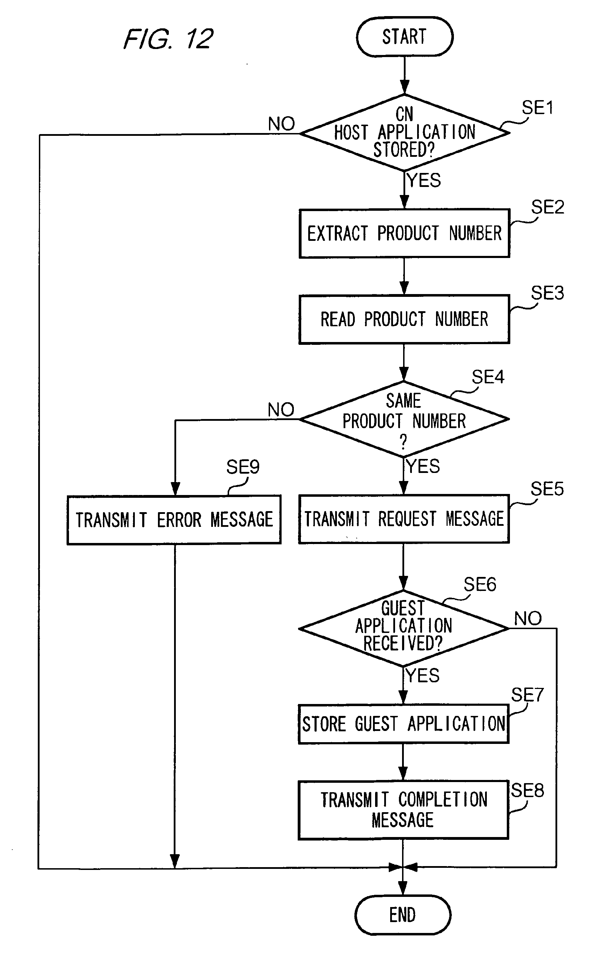

Fig. 12 shows an example of a processing flow of receiving a guest application from mobile phone 100 and storing it. When local communication unit 503 receives from mobile phone 100 a request message for allowance of transmission of the guest application, CPU 509 determines whether the host application is stored in storage 506 (step SE1). If the host application is stored (step SE1, YES), CPU 509 extracts a product number included in the request message (step SE2).

Next, CPU 509 reads the product number stored in storage 506 (step SE3), and compares the number read from storage 506 with the product number extracted from the request message (step SE4). If both of the product numbers are same, CPU 509 transmits a response message requesting transmission of the guest application to mobile phone 100 (step SE5). Upon receipt of the guest application (step Se6, YES), CPU 509 stores the guest application in storage 506 and creates a completion message for notifying completion of storing the application, to send to mobile phone 100 (step SE8).

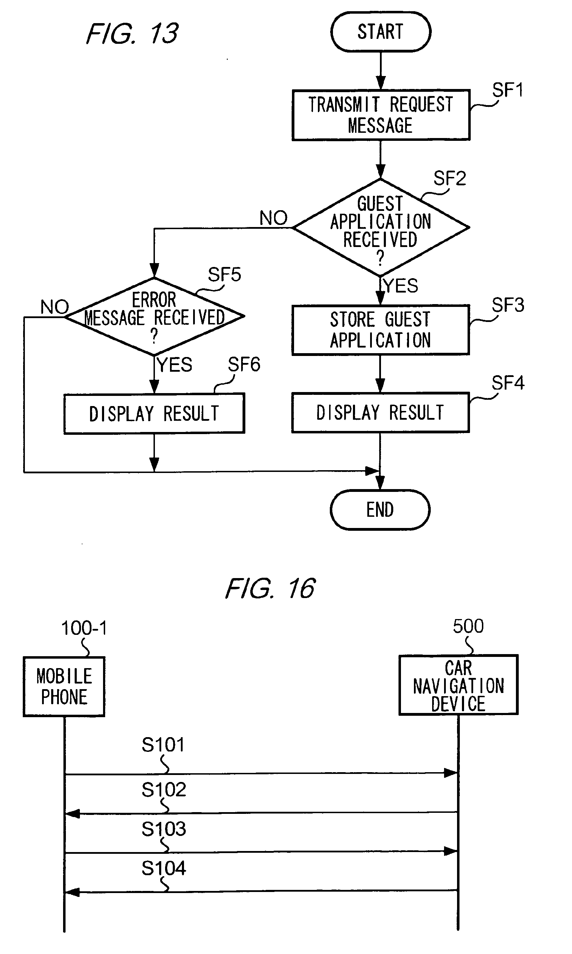

Fig. 13 shows an example of a processing flow of obtaining a guest application in response to an instruction made by a user of car navigation device 500. When the user inputs, via input device 504, an instruction of obtaining the guest application, CPU 509 creates a request message for the guest application, which request message includes a product number stored in storage 506, and sends the request message to mobile phone 100 (step SF1). Upon receipt of the guest application from mobile phone 100 (step SF2, YES), CPU 509 stores the application in storage 506 (step SF3). Next, CPU 509 displays a screen shown in Fig. 14 on display 505 (step SF4).

### <B. Operation>

Examples of operation of this embodiment will now be described. In the following description, mobile phones 100-1 and 100-2 should download, in advance, from server 400 the CN host application and a guest application and store the applications in storage 106. Also, mobile phone 100 and car navigation device 500 are ready for performing communication with each other via Bluetooth™.

### (1. Storing CN host application in car navigation device)

Fig. 16 shows a processing flow of transfer of the CN host application from mobile phone 100 to car navigation device 500. When a user of mobile phone 100-1 inputs, via input device 104, an instruction of transmission of the CN host application to car navigation device 500, CPU 109 checks that the CN host application is stored in storage 106 (step SA1 of Fig. 5). Since the CN host application is stored in storage 106 (step SA1, YES), CPU 109 creates a request message for allowance of transmission of the CN host application to notify transmission of the application to car navigation device 500. The request includes a product number of mobile phone 100-1, that is, "MS0001". CPU 109 transmits via local communication unit 103 the request message to car navigation device 500 (step SA2 of Fig. 5 and step S101 of Fig. 16).

When received by local communication unit 503, the request message is then supplied to CPU 509. CPU 509 extracts the product number included in the request message and stores the number in storage 506 (step SD1 of Fig. 11). Next, CPU 509 creates a response message to notify receipt of the application and transmits via local communication unit 503 the response message to mobile phone 100-1 (step SD2 of Fig. 11 and step S102 of Fig. 16).

When received by local communication unit 103 of mobile phone 100-1, the response message is then supplied to CPU 109. Upon receipt of the message (step SA3, YES), CPU reads the CN host application from storage 106 (step SA4). Next, CPU 109 controls communication unit 103 to transmit the CN host application to car navigation device 500 (step SA5 of Fig. 11and step 103 of Fig. 16).

When car navigation device 500 receives the CN host application (step SD3, YES), CPU 509 stores the application in storage 506 (step SD4). After completion of storing the application, CPU 509 creates a completion message to notify completion of the storing. Next, CPU 509 transmits via local communication unit 503 a completion message to mobile phone 100-1 (step SD5).

Upon receipt of the completion message, CPU 109 of mobile phone 100-1 deletes the CN host application from storage 106 (step SA7).

### (2. Transfer of guest application to car navigation device - example 1-)

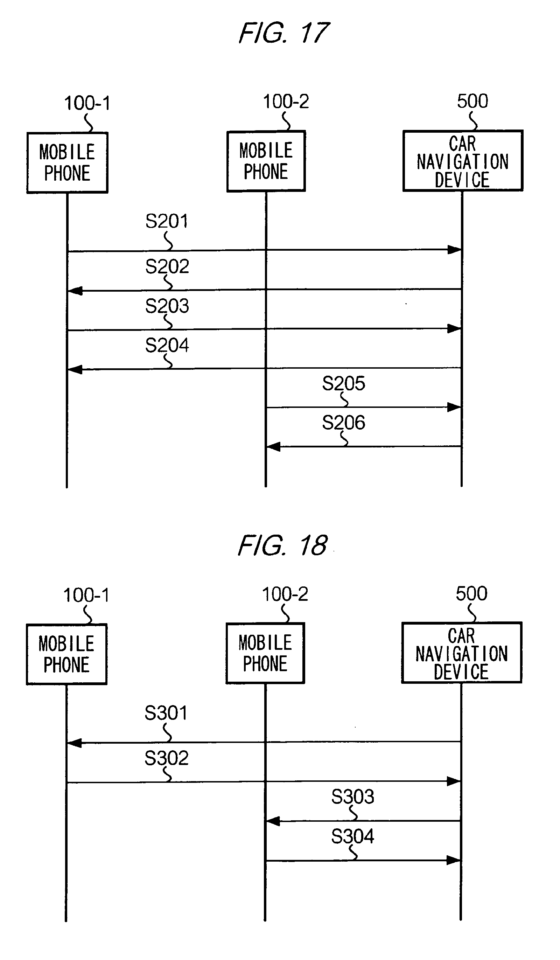

Referring to Fig. 17, a processing flow of transfer of a CN guest application from mobile phone 100 to car navigation device 500, in response to a request from mobile phone 100 will now be described. In the following description, the CN host application and the product number of mobile phone 100-1 "MS0001" should be stored in storage 506, as described above.

When the user of mobile phone 100-1 inputs, via input device 104, an instruction of transmission of the guest application to car navigation device 500, CPU 109 firstly checks that the guest application is stored in storage 106 (step SB 1 of Fig. 6). Since the application is stored in storage 106 (step SB 1, YES), CPU 109 creates a request message for allowance of transmission of the application to notify the transmission to the car navigation device 500. The request includes the product number of mobile phone 100-1 "MS0001". CPU 109 transmits via local communication unit 103 the request message to car navigation device 500 (step SB2 of Fig. 6 and step S201 of Fig. 17).

When received by local communication unit 503, the request message is then supplied to CPU 509. CPU 509 determines whether the CN host application is stored in storage 506 (step SE1 of Fig. 12). Since the application is stored in storage 506 (step SE1, YES), CPU 509 extracts the product number included in the request message (step SE2). Next, CPU 509 reads the product number "MS0001" from the storage 506 (step SE3).

Next, CPU 509 compares the extracted product number with the number read from storage 506 (step SE4 of Fig. 12). Since both the numbers are same ("MS0001"), CPU509 creates a request for allowance of transmission of the guest application. Next, CPU 509 transmits via local communication unit 503 the request to mobile phone 100-1 (step SE5 of Fig. 12 and step S202 of Fig. 17).

When received by local communication unit 103 of mobile phone 100-1, the request message is then supplied to CPU 109. CPU 109 reads the CN guest application from storage 106 (step SB3, YES and step SB4 of Fig. 6). Next, CPU 109 controls local communication unit 103 to transmit the CN guest application to car navigation device 500 (step SB5 of Fig. and step S203 of Fig. 17)

Upon receipt of the guest application (step SE6, YES of Fig. 12), CPU 509 stores the guest application in storage 506 (step SE7 of Fig. 12). Next, CPU 509 creates a completion message for notifying completion of the storing, and transmits the message to mobile phone 100-1 via local communication unit 503 (step SE8 of Fig. 12 and step S204 of Fig. 17).

Upon receipt of the completion message (step SB6, YES of Fig. 6), CPU 109 displays a screen shown in Fig. 8 on display 105 (step SB7 of Fig. 6), to notify a user of mobile phone 100-1 of the completion of storing the guest application in car navigation device 500.

Next, when a user of mobile phone 100-2 inputs, via input device 104 of mobile phone 100-2, an instruction of transmission of a guest application to car navigation device 500, CPU 109 of mobile phone 100-2 first checks that the guest application is stored in storage 106 (step SB 1 of Fig. 6). Since the guest application is stored in storage 106 (step SB1, YES), CPU 109 creates a request for allowance of transmission of the CN guest application. The request includes a product number of mobile phone 100-2 "MS0002". CPU 109 transmits the request to car navigation device 500 via local communication unit 103 (step SB2 of Fig. 6 and step S205 of Fig. 17).

When received by local communication unit 503, the request is then supplied to CPU 509. CPU 509 determines whether the CN host application is stored in storage 506 (step SE1 of Fig. 12). Since the CN host application is stored in storage 506 (step SE1, YES), CPU 509 extracts the product number included in the request, which is "MS0002", and reads the product number from storage 506, which is "MS0001" (step SE3).

Next, CPU 509 compares the product numbers read from storage 506 with the number extracted from the request (step SE4). Since the numbers are "MS0001" and "MS0002" and thus different (step SE4, NO), CPU 509 creates an error message for requesting stopping transmission of the guest application (step SE4, NO). Next, CPU509 transmits an error message to mobile phone 100-2 (step SE9 of Fig. 12 and step S206 of Fig. 17).

Upon receipt of the error message (step SB3, NO and step SB8, YES of Fig. 6), CPU 109 displays a screen shown in Fig. 9 on display 105 (step SB9), to notify to the user of mobile phone 100-2 that transmission of the guest application is refused.

As described above, mobile phone 100-2, which has not yet transmitted the CN host application to car navigation device 500, does not transmit the guest application to car navigation device 500. Namely, in this embodiment a mobile phone that can be allowed to transmit a guest application to car navigation device 500 is limited to mobile phone 100-1, that has already transmitted the CN host application. Therefore, transfer of a guest application to car navigation device 500 can be restricted.

### (3. Transfer of CN guest application - example 2 -)

Referring to Fig. 18: transfer of a guest application from mobile phone 100 to car navigation device 500, in response to a request from car navigation device 500. In the following description, the CN host application together with the product number of mobile phone 100-1 "MS0001" should be transmitted from mobile phone 100-1 to car navigation device 500 and stored in storage 506.

When a user of car navigation device 500 inputs, via input device 104, an instruction of obtaining a guest application from mobile phone 100-1, CPU 509 creates a request message for the guest application. The request message includes the product number of mobile phone 100-1 "MS0001", which is received from mobile phone 100-1 together with the CN host application. Next, CPU 509 transmits the request message to mobile phone 100-1 via local communication unit 503 (step SF1 of Fig. 13 and step S301 of Fig. 18).

When received by local communication unit 103, the request message is then supplied to CPU 109. Upon receipt of the request message, CPU 109 determines whether the guest application is stored in storage 106 (step SC1 of Fig. 7). Since the guest application is stored in storage 106, CPU 109 extracts the product number included in the request (step SC2), and reads the product number "MS0001" from a storage 106 (step SC3).

Next, CPU 109 compares the number extracted from the request with the number read from storage 106 (step SC4). In this example both the numbers are same ( "MS0001") (step SC4, YES). Accordingly, CPU 109 reads the guest application from storage 106 (step SC5), and transmits the guest application to car navigation device 500 (step SC6 of Fig. 7 and step S302 of Fig. 18).

Upon receipt of the guest application (step SF2, YES of Fig. 13), CPU 509 stores the guest application in storage 506 (step SF3). Next, CPU 509 displays a screen shown in Fig. 14 on display 505, to notify a user of car navigation device 500 of completion of storing the guest application.

After that, when the user of car navigation device 500 inputs, via input device 104, an instruction of obtaining the CN guest application from mobile phone 100-2, CPU 509 creates a request message for the guest application. The request message includes the product number of mobile phone 100-1 "MS0001", which was obtained from mobile phone 100-1 together with the CN host application. CPU 509 transmits the request to mobile phone 100-2 (step SF1 of Fig. 13 and step S303 of Fig. 18).

When received by local communication unit 103, the request message is then supplied to CPU 109. Upon receipt of the request message, CPU 109 determines whether the guest application is stored in storage 106 (step SC1 of Fig. 7). Since the guest application is stored in storage 106 (step SC1, YES), CPU 109 extracts the product number included in the request (step SC2), and reads the product number "MS0002" from storage 106 (step SC3).

Next, CPU 109 compares the number read from storage 106 with the number extracted from the request (step SC4). In this example, the numbers are "MS0002" and "MS0001", respectively and thus different (step SC4, NO). Accordingly, CPU 109 creates an error message for notifying that transfer of the guest application is not allowed. CPU 109 transmits the error message to car navigation device 500 via local communication unit 103 (step SC7 of Fig. 7 and step S304 of Fig. 18).

Upon receipt of the error message (step SF2, NO and step SF5, YES of Fig. 13), CPU 509 displays a screen shown in Fig. 15 on display 505 (step SF6), to notify the user of car navigation device 500.

In this way, car navigation device 500 cannot obtain a guest application from a mobile phone 100-2 which has not yet transmitted the host application to car navigation device 500.

In other words, destination of transfer of a CN guest application is restricted to a particular car navigation device. On the other hand, a car navigation device can obtain a guest application only from a particular mobile phone. For example, in a case where a user of the car navigation device installs the host application in the car navigation device using a mobile phone owned by another person, it is impossible for the user to install a guest application in the car navigation device using a mobile phone owned by the user. In this case the user will accordingly have to borrow the other person's mobile phone to install a CN guest application in the car navigation device. This is very inconvenient for the user and also unrealistic. In view of the foregoing, unlimited copying of an application will be prevented effectively.

Further, it is possible to delete the CN host application stored in a mobile phone 100, after transmission of the CN host application to car navigation device 500. In this case, it is not possible to transfer the CN host application to another car navigation device unless the mobile phone 100 downloads the CN host application again from server 400. This is a very complicated procedure for transfer of a guest application to other car navigation devices. Thus, copying of a CN guest application will be restricted far more effectively .

### <3. Modifications>

Local communication performed between mobile phone 100 and car navigation device 500 is not limited to communication via Bluetooth™. For example, local communication may be performed using infrared light in conformity with IrDA (Infrared Data Association) standard.

It is possible that the OS software is sorted in a DVD-ROM, flash ROM, IC card in which a flash ROM is incorporated, floppy disk etc., to be distributed via a network. In this case a user is able to download the latest version of OS software from a server via the Internet to upgrade the OS.

It is to be noted that a content is not limited to an application program. For example, it is possible that a content as a guest application is digital data such as picture data, movie data, or music data, and a content as a host application is an application program for reproducing the data. It is also possible that a content as a guest application is data interpretable for a WWW browser program such as XML (extensible Markup Language) data, binary data, or script data, and a content for a host application may be a VVWW browser program.

Further, it is possible that a product number and the CN host application are transmitted by mobile phone 100 at the same time or independently.

Still further, it is possible that mobile phone 100 transmits a product number and a guest application at the same time. In this case, if the product number stored in car navigation device 500 and the received product number are same, car navigation device 500 may store the CN guest application. As a result, the number of communication sequences is reduced.

Still further, it is possible that a product number transmitted to car navigation device 500 is another type of number for uniquely identifying a mobile phone.

Still further, an application program may be described using Java™ byte-code. An application program for performing a runtime environment may be a Java execution environment for executing a program described using Java byte-code.

From the foregoing, in the present invention a content can be transferred or stored to only an electronic device associated with a communication terminal. Thus, unlimited copies of a content to electronic devices via local communication is prevented.

While the present invention will be described in conjunction with the preferred embodiments, it will readily be understood that it is not intended to limit the scope of the invention to these embodiments. On the contrary, the invention is intended to cover alternatives, modifications, and equivalents, which may be included within the spirit and scope of the inventions as defined by the appended claims.

## Claims

1. An electronic device comprising:
a storage;
an obtaining unit for obtaining a first application that can be executed on said electronic device and an identifier of a communication terminal, to store in said storage;
a receiving unit for receiving from a communication terminal an identifier of said communication terminal and a second application that can be executed only with said first application; and
a storing control unit for comparing said identifier received by said receiving unit with said identifier stored in said storage and, if both of said identifiers are identical, storing said second application in said storage, and if both of said identifiers are not identical, deleting said second application.

2. An electronic device comprising:
a storage;
an obtaining unit for obtaining a first application that can be executed on said electronic device and an identifier of a communication terminal, to store in said storage;
a first receiving unit for receiving an identifier of a communication terminal from said communication terminal;
a transmitting unit for comparing said identifier received by said first receiving unit with said identifier stored in said storage and, only if said identifiers are identical, transmitting a request to said communication terminal; and
a second receiving unit for receiving from said communication terminal a second application that can be executed only with said first application.

3. The device of Claim 1 or 2, wherein said electronic device is a car navigation device.

4. A communication terminal comprising:
a storage for storing an identifier of said communication terminal, a first application, and a second application that can be executed only with said first application;
a transmitting unit for transmitting said identifier of said communication terminal and said first application to an electronic device that is capable of executing said first application;
a receiving unit for receiving an identifier from an electronic device;
a transfer controlling unit for comparing said identifier received by said receiving unit with said identifier stored in said storage and, only if said identifiers are identical, transmitting said second application to said electronic device.

5. A communication terminal comprising:
a storage for storing an identifier of said communication terminal, a first application, and a second application that can be executed only with said first application;
a transmitting unit for transmitting said identifier of said communication terminal and said first application to an electronic device that is capable of executing said first application;
a transfer controlling unit for receiving a message from a communication terminal and determining, on the basis of said message, whether to transmit said second application to said communication terminal.

6. A computer program product for causing a computer to execute the steps of:
obtaining a first application that can be executed on said computer and an identifier of a communication terminal to store in a storage of said computer;
receiving from a communication terminal an identifier of said communication terminal and a second application that can be executed only with said first application; and
comparing said received identifier with said identifier stored in said storage and, if said identifiers are identical, storing said second application in said storage, and if said identifiers are not identical, deleting said second application.

7. A computer program product for causing a computer to execute the steps of:
obtaining a first application that can be executed on said computer and an identifier of a communication terminal to store in a storage of said computer;
receiving an identifier of a communication terminal from said communication terminal;
comparing said received identifier with said identifier stored in said storage and, only if said identifiers are identical, transmitting a request to said communication terminal; and
receiving from said communication terminal a second application that can be executed only with said first application.
